# EUROPÄISCHE PATENTANMELDUNG

(11) **EP 0 758 062 A1**
(43) Veröffentlichungstag der Anmeldung: **12.02.1997**
(21) Anmeldenummer: 96109284.8
(22) Anmeldetag: 11.06.1996
(51) Int. Cl.: F16H 63/42

(54) **Schaltstellungsanzeige**

(30) Priorität: 09.08.1995 DE 19529207
(71) Anmelder: LEMFÖRDER METALLWAREN AG., D-49441 Lemförde (DE)
(72) Erfinder: Ersoy, Metin, Dr. Ing., 65396 Walluf (DE)

(57) **Zusammenfassung**

Die Erfindung bezieht sich auf eine Schaltstellungsanzeige am Wählhebel (2) eines Gangwechselgetriebes in einem Kraftfahrzeug mit einem auf einem Knauf (1) am Wählhebel abgebildeten Schaltschema, welches auf einer durchscheinenden Plakette (3) über einer Leiterplatte (4) mit einer durch elektrische Signale beim Einlegen der zugehörigen Schaltstellung aktivierten LED-Anzeige (5) unter jedem Schaltstellungssymbol angeordnet ist.

## Beschreibung

Die Erfindung bezieht sich auf eine Schaltstellungsanzeige am Wählhebel eines Gangwechselgetriebes in einem Kraftfahrzeug nach dem Oberbegriff des Patentanspruches 1.

In einem Kraftfahrzeug ist die Anzeige der vom Fahrzeuglenker gewählten Schaltstellung erwünscht und für eine ökonomische Fahrweise von Bedeutung. Aus der DE 42 28 982 -C1- ist eine Anzeige bekannt, bei der Lichtleiter innerhalb eines hohl ausgebildeten Schalthebels verlegt sind. Diese Lichtleiter enden direkt unterhalb einer lichtdurchlässigen Abdeckung im Knauf des Schalthebels und dienen dazu, das von dort einfallende Licht auf eine reflektierende Fläche zu leiten, auf der die Symbole der Schaltstellung, zum Beispiel eines gewählten Getriebeganges, dargestellt sind. Von der reflektierenden Fläche wird das Licht ebenfalls über Lichtleiter zu dem Anzeigefeld im Schalthebelknauf geleitet und stellt dort die jeweilige Schaltstellung als Symbol dar. Es wird künstliches Licht zur Beleuchtung verwendet, welches von Scheinwerfern des Kraftfahrzeuges herrühren kann.

Es sind auch Schaltstellungsanzeigen bekannt, bei denen eine Glühlampe zur Ausleuchtung des gesamten Anzeigebereiches dient. Dabei nimmt die Leuchtstärke mit zunehmender Entfernung von der Glühlampe immer mehr ab, so daß eine gleichmäßige Ausleuchtung des Anzeigenbereiches nicht erfolgt.

Abweichende Ausbildungen einer Schaltstellungsanzeige sind beispielsweise aus der DE 39 29 268 -A1- bekannt.

Der Erfindung liegt die Aufgabe zugrunde, eine Schaltstellungsanzeige zu entwickeln, die eine kostengünstige Herstellung ermöglicht und eine komfortable Bereicherung der Innenausstattung eines Kraftfahrzeuges darstellt.

Die Erfindung löst diese Aufgabe mit Ausbildungsmerkmalen nach dem Kennzeichen des Patentanspruches 1.

Die durchscheinende Plakette mit den Schaltstellungssymbolen befindet sich vorzugsweise an der Oberseite eines am oberen Ende eines Wählhebels ausgebildeten Schaltknaufs. Unterhalb dieser durchsichtigen Plakette ist die Leiterplatte vorgesehen, auf der unter jeder Schaltstellung eine Leuchtdiode LED (Light Emmitted Diod) aufgelötet ist. Elektrische Signale zur Aktivierung dieser LED werden bei einem automatischen Getriebe in den Schaltstellungen und bei handgeschaltetem Getriebe beim Einlegen der Gänge ausgelöst, so daß das der Schaltstellung bzw. dem eingelegten Gang zugeordnete LED aufleuchtet.

Zur Steigerung des Komforts können die LED bei eingeschalteter Fahrzeugbeleuchtung schwach aufgehellt sichtbar sein.

Erreicht wird durch die Erfindungsmerkmale ein sehr leichtes Erkennen der Schaltsteilung bzw. des eingelegten Ganges und eine erhebliche Aufwertung der Innenausstattung des Fahrzeuges mit Nachtbeleuchtung ohne Zusatzkosten. Von besonderem Vorteil ist aber die durch die Erfindungsmerkmale gesteigerte Fahrsicherheit.

In der Zeichnung ist ein Ausführungsbeispiel der Erfindung dargestellt. Es zeigen:
- Figur 1: einen vertikalen Schnitt durch den Schaltknauf eines Wählhebels in einer Ebene parallel zur Fahrzeuglängsrichtung und
- Figur 2: eine gegenüber Figur 1 um 90° versetzte Ansicht des Schaltknaufs.

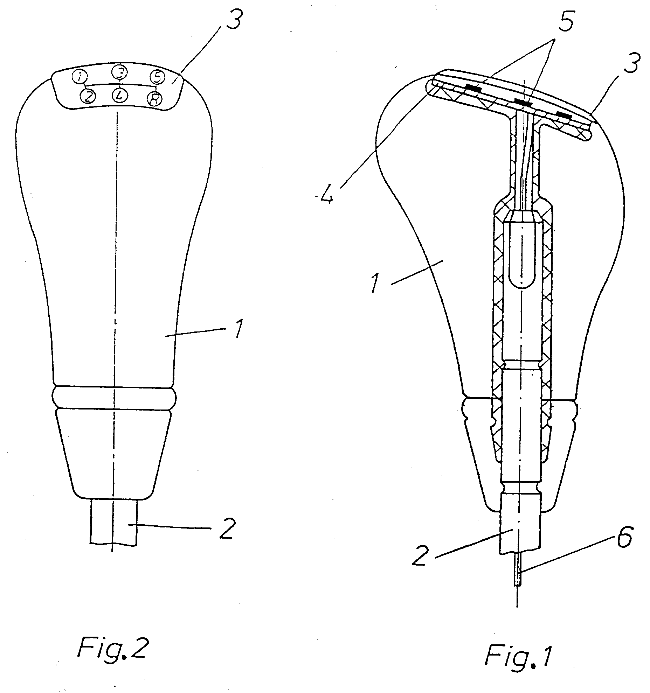

Der Schaltknauf 1 ist auf das obere Ende eines hohl ausgebildeten Wählhebels 2 aufgesetzt. An der Oberseite des Schaltknaufes 1 ist ein Fenster aus einer durchscheinenden Plakette 3 angeordnet, welches Symbole für die Schaltstellungen bzw. bei Handschalthebeln für die Gangstufen aufweist, wie es besser aus der Figur 2 erkennbar ist. Unterhalb der Plakette 3 ist eine Leiterplatte 4 angeordnet, auf der unter jedem Schaltstellungssymbol bzw. Gangsymbol ein LED 5 aufgelötet ist. Jedes dieser LED 5 auf der Leiterplatte 4 ist durch Kabel 6 mit einem in der Zeichnung nicht dargestellten Kontaktschalter für die jeweils zugehörige Schaltstellung elektrisch leitend verbunden.

Bei Getrieben mit einer Handschaltung kann die Leiterplatte zusätzliche Leuchtdioden aufweisen, durch die dem Fahrzeuglenker die Grenze oder der Grenzbereich für die Umschaltung in die nächst höhere oder nächst niedrigere Gangstufe angezeigt wird.

### BEZUGSZEICHENLISTE:

- 1: Knauf
- 2: Wählhebe
- 3: Plakette
- 4: Leiterplatte
- 5: Leuchtdiode LED (Light Emmitted Diod)
- 6: Kabel

## Patentansprüche

1. Schaltstellungsanzeige am Wählhebel eines Gangwechselgetriebes in einem Kraftfahrzeug mit einem auf einem Knauf am Wählhebel abgebildeten Schaltschema, dadurch gekennzeichnet, daß das Schaltschema auf einer durchscheinenden Plakette (3) und unter dieser Plakette eine Leiterplatte (4) mit einer durch elektrische Signale beim Einlegen der zugehörigen Schaltstellung aktivierten Leuchtdiode (LED-Anzeige9 (5) unter den Schaltstellungssymbolen angeordnet sind.

2. Schaltstellungsanzeige nach Anspruch 1, dadurch gekennzeichnet, daß die LED-Anzeigen (5) bei eingeschalteter Fahrzeugbeleuchtung durch schwache Aufhellung sichtbar sind.

3. Schaltstellungsanzeige nach den Ansprüchen 1 oder 2, dadurch gekennzeichnet, daß die auf der Leiterplatte (4) unter jedem der Schaltstellungssymbole der Plakette (3) aufgelöteten LED-Anzeigen (5) elektrisch leitend mit einem Kontaktschalter für die zugehörige Schaltstellung verbunden sind.

4. Schaltstellungsanzeige nach einem der Ansprüche 1 bis 3, dadurch gekennzeichnet, daß die Leiterplatte bei Getrieben mit einer Handschaltung zusätzliche Leuchtdioden aufweist, die dem Fahrzeuglenker die Grenze beziehungsweise den Grenzbereich für die Umschaltung in die nächst höhere beziehungsweise nächst niedrigere Gangstufe anzeigen.
